# FASCICULE DE BREVET EUROPEEN

(11) **EP 3 017 697 B1**
(45) Date de publication et mention de la délivrance du brevet: **22.05.2019**
(21) Numéro de dépôt: 15193553.3
(22) Date de dépôt: 06.11.2015
(51) Int. Cl.: A01K 91/053

(54) **DISPOSITIF D'ÉCARTEMENT ET D'ATTACHE DE LIGNE D'HAMEÇON**
VORRICHTUNG ZUM VERTEILEN UND BEFESTIGEN EINER ANGELLEINE
DEVICE FOR SPACING AND FASTENING A HOOK LINE

(30) Priorité: 06.11.2014 FR 1460733
(43) Date de publication de la demande: 11.05.2016
(73) Titulaire: Evrard, Eric, 06300 Nice (FR)
(72) Inventeur: Evrard, Eric, 06300 Nice (FR)
(74) Mandataire: Hautier IP

(56) Documents cités:
- FR-A1- 2 437 163
- JP-A- H05 123 089
- US-A- 1 464 163
- US-A- 2 462 290
- US-A- 4 989 360
- US-A- 5 189 827

## Description

### DOMAINE DE L'INVENTION

La présente invention est relative notamment à un dispositif d'attache et d'écartement de lignes d'hameçons.

Une application préférée concerne l'industrie de la pêche et plus spécifiquement la pêche sportive.

### ARRIERE-PLAN TECHNOLOGIQUE

On distingue deux types de pêches. La pêche industrielle qui se pratique avec des filets dans le but de commercialiser le poisson, et la pêche sportive dont le but n'est pas la commercialisation du poisson. Dans ce type de pêche le matériel du pêcheur joue un rôle primordial. Ainsi on n'utilisera pas les mêmes fils, les mêmes cannes, les mêmes hameçons, les mêmes appâts et les mêmes techniques de pêche en fonction des poissons recherchés et des conditions de pêche.

Une ligne de pêche classique comporte une canne un moulinet, éventuellement un bouchon, un fil, un bas de ligne, un hameçon et un appât ou leurre pour attirer le poisson. Le problème de ce type de montage est la limitation à un seul appât et un hameçon. Cette limitation rend la prise d'un poisson plus incertaine d'une part du fait qu'il n'y a qu'un seul appât à repérer pour le poisson, et d'autre part il n'est pas « naturel » de voir un seul petit poisson isolé. En effet ces derniers se déplacent le plus souvent en banc. Or le but d'un appât est d'effectuer une simulation la plus proche possible du comportement naturel des proies afin de tromper leurs prédateurs. Afin de simuler un banc de poisson et d'augmenter les chances de prises des solutions prévoient de multiplier les lignes d'hameçons. Un autre problème de la ligne de pêche classique est que de nombreux noeuds doivent être réalisés entre la ligne principale, le bas de ligne et l'hameçon ou l'appât. Ces noeuds fragilisent la ligne (le fait de plier un fil de pêche réduit sa résistance), demandent un savoir faire spécifique, prennent du temps ce qui est préjudiciable (notamment en cas de compétition ou le changement de ligne doit se faire le plus rapidement possible) et peuvent être difficiles à réaliser par certaines personnes ou dans certaines conditions (température basses amoindrissant la sensibilité et dextérités des doigts, luminosité faible, humidité, stress, etc.).

Pour résoudre une partie des problèmes on a vu apparaitre des dispositifs de multiplication de lignes d'hameçon comme par exemple les mitraillettes de pêche. Ces mitraillettes disposent d'un fil principal de bas de ligne sur lequel on attache plusieurs fils avec des appâts (des plumes dans ce cas précis) et des hameçons. Le but est de simuler un petit banc de poissons. Ainsi d'une part les appâts se rapprochent plus de la réalité naturelle, et d'autre part on multiplie les chances d'attraper plusieurs poissons du fait de l'augmentation du nombre d'hameçons sur la ligne. Le problème avec ce genre de montage est que les lignes d'hameçon s'emmêlent facilement. Cet emmêlement est dû à la fabrication de ce type de dispositif de multiplication de lignes d'hameçon. En effet lesdites lignes d'hameçon sont simplement nouées au fil du bas de ligne sans aucun dispositif d'écartement. Or lorsqu'un poisson mord un hameçon il va essayer de s'échapper et ses débattements emmêlent la ligne. Les courants marins sont aussi susceptibles d'emmêler les lignes. Enfin lorsque la ligne plonge ou lorsqu'elle est ramenée rapidement elle à tendance à vriller du fait du non centrage des appâts. Ces derniers font « hélices ».

Pour remédier à ce problème il a été proposé un dispositif d'écartement de ligne d'hameçon. Ce dispositif s'appelle notamment « clipot ». Un « clipot » comprend une portion proximale permettant la fixation au fil de bas de ligne, une portion d'écartement rectiligne, et une portion distale d'attache formée par un anneau servant à nouer la ligne d'hameçon.

Les « clipots » traditionnels peuvent s'attacher au fil de bas de ligne sans effectuer de noeud. Leur portion proximale est formée d'un triangle dont l'un des cotés comporte un créneau. La fixation se fait par un enroulement de la ligne principale du bas de ligne (qui est préalablement tendu) autour du coté avec le créneau de la portion proximale du « clipot ». Avec cette solution le problème de l'emmêlement des fils d'hameçon du fait de l'absence d'écartement est partiellement résolu. Néanmoins, l'efficacité de ces systèmes s'avère limitée par le fait que le clipot n'est pas libre de tourner sur lui-même, afin de supprimer tous les vrillages qui sont sources d'emmêlements et même de rupture du fil à l'extrême.

De plus la fixation de la ligne d'hameçon se fait toujours par un noeud. Cela pose les mêmes problèmes que ceux évoqués précédemment.

Le document FR2437163 propose une solution dans laquelle ledit positif d'attache comprend une branche sur laquelle on embobine la ligne de pêche, une saillie formée sur une partie intermédiaire de cette branche, et un organe pour éviter le débobinage prévu sur au moins une extrémité de la branche. Avec cette solution, la fixation de la ligne d'hameçon reste complexe.

L'invention permet de résoudre tout ou partie des inconvénients des techniques actuelles.

### RESUME DE L'INVENTION

Un aspect de l'invention concerne, suivant la revendication indépendante 1, un dispositif d'écartement et d'attache de ligne d'hameçon comprenant :
∘ Une portion proximale configurée pour être montée sur un fil de bas de ligne de manière à permettre une rotation libre du dispositif autour du fil de bas de ligne ;
∘ Une portion distale conformée pour être liée à la ligne d'hameçon et maintenue à distance du fil de bas de ligne ;
∘ Une portion d'écartement, s'étendant entre les portions proximale et distale et conformée pour maintenir la portion distale à distance de la portion proximale ;
caractérisé en ce que :
- La portion d'écartement comprend une butée comprenant : un premier coude, un deuxième coude et une portion de retenue ; ladite portion de retenue s'étendant entre le premier coude et le deuxième coude ;
et en ce que le dispositif comprend :
- une portion de liaison s'étendant entre la portion proximale et ledit premier coude ;
- une portion d'enroulement de la ligne d'hameçon s'étendant depuis le deuxième coude jusqu'à la portion distale et s'étendant dans une direction principale ;
en ce que la portion de liaison, la portion de retenue et la portion d'enroulement sont parallèles entre elles ;
et en ce que la butée est configurée de manière à ce qu'en passant une ligne d'hameçon dans la butée, la butée retienne la ligne d'hameçon lorsqu'une tension est appliquée sur les deux brins de la ligne d'hameçon s'étendant depuis la butée et dans ladite direction principale selon laquelle la portion d'enroulement s'étend.

Cette disposition permet au dispositif de fixer une ligne d'hameçon sur un « clipot » par exemple sans effectuer le moindre noeud. Ainsi la ligne s'en trouve d'une part plus sécurisée (pas de noeud qui fragilise la ligne, et pas de risque de mauvaise réalisation du noeud) et d'autre part plus facile à utiliser (changement rapide de ligne en compétition, facilité d'utilisation pour les toutes les personnes).

Par ailleurs, aucun noeud n'étant nécessaire, l'utilisateur peut fixer la ligne d'hameçon sur le dispositif avec une seule main. En effet il lui suffit de maintenir avec l'une de ses deux mains les deux brins de la ligne d'hameçon de manière à former une boucle, d'enfiler la boucle dans le premier coude, puis sans relâcher les deux brins, d'enrouler ces deux brins autour de la portion d'enroulement. La fixation est ainsi fiable et particulièrement rapide. Par ailleurs, elle ne nécessite pas l'utilisation de l'autre main qui peut par exemple continuer à porter la canne sans avoir à la reposer. Le gain de temps est donc considérable ce qui est particulièrement appréciable en compétition.

Ce gain de temps est également appréciable lors de la désolidarisation de la ligne d'hameçon hors du dispositif.

En outre, il s'avère qu'avec la structure du double coude et la disposition relative des portions de liaison, de retenue et d'enroulement, le dispositif présente une très grande capacité de résistance lorsqu'une charge importante est appliquée sur la ligne d'hameçon.

L'invention trouve aussi son intérêt par la très nette tendance des autorités sportives à encourager le « no kill » (sans mort en français) ou le « catch and release » (attrape et relâche en français). Ainsi lors des compétitions les poissons sont comptabilisés (poids, espèce, nombre, taille) par un juge avant d'être relâchés. Lorsqu'ils sont amenés à la pesée il n'y a que les poissons vivants qui sont comptabilisés. Avec le dispositif les poissons peuvent être rapidement détachés du bas de ligne, surtout s'ils ont avalés profondément l'hameçon. Il suffira de couper le fil d'hameçon à ras la bouche du poisson. Si les hameçons ne sont pas en acier inoxydables, ils seront rapidement dissous par les sucs gastriques. En appâtant de nombreux hameçons, les compétiteurs pourront rapidement réagir aux situations d'urgence (passage d'un banc de poisson, rupture d'un fil d'hameçon, changement d'appât etc.

Enfin la présence d'une portion proximale en forme de tube permet à l'invention de tourner autour de la ligne principale du bas de ligne et d'éviter les emmêlements des lignes d'hameçons.

Suivant l'invention, la butée de l'invention est configurée de manière à ce qu'en passant une ligne d'hameçon dans la butée, la butée retienne la ligne d'hameçon lorsqu'une tension est appliquée dans la direction principale de la portion d'enroulement et sur les deux brins de la ligne d'hameçon s'étendant depuis la butée.

Cette disposition permet à la butée de retenir la ligne d'hameçon avec la formation d'une boucle par ladite ligne d'hameçon.

L'invention concerne aussi un procédé d'attache et d'écartement de la ligne d'hameçon au dispositif de l'invention, suivant la revendication indépendante 9, et comprenant notamment
∘ la formation d'une boucle avec l'extrémité opposée de la ligne d'hameçon par rapport à l'hameçon ;
∘ la fixation de ladite boucle dans le premier coude de ladite butée ;
∘ l'enroulement des deux brins de la boucle sur uniquement la portion d'enroulement ;
∘ le passage dans la portion distale des deux brins de la boucle.
De façon avantageuse, ce procédé est tel qu'il permet l'attache sans noeud d'une ligne d'hameçon à un dispositif d'écartement tel un « clipot ».

Selon un mode de réalisation avantageux et non limitatif, à l'issue de la formation avec la ligne d'hameçon d'une boucle et de deux brins s'étendant depuis la boucle, l'utilisateur tient d'une seule main les deux brins sans les lâcher. L'utilisateur continue de tenir de ladite seule main les deux brins sans les lâcher jusqu'à et lors de ladite étape de passage dans la portion distale des deux brins de la boucle. Selon un mode de réalisation avantageux et non limitatif, les étapes précédentes de formation, d'enfilement, d'enroulement et de passage sont effectuées sans effectuer de noeud sur la ligne d'hameçon.

Selon un mode de réalisation non couvert par l'invention, il est également divulgué un procédé de fabrication du dispositif caractérisé en ce que ledit dispositif est formé par le pliage et/ou l'enroulage d'un fil métallique. Il est également divulgué un procédé de fabrication du dispositif comprenant le pliage et/ou l'enroulage d'un fil métallique de manière à former une pièce monolithique comprenant : ladite portion proximale; ladite portion d'écartement et ladite portion distale.

Ce procédé permet de fabriquer le dispositif d'une pièce monolithique et avec des coûts de productions bas et maitrisés.

Selon la revendication indépendante 13, l'invention porte également sur un système de bas de ligne comprenant :
∘ Au moins un dispositif pour ligne d'hameçon selon l'invention ;
∘ Une ligne d'hameçon passée dans ladite butée et enroulée autour de ladite portion d'enroulement.

Selon un mode de réalisation, la ligne d'hameçon comprend au moins les éléments suivants: un fil de pêche, un hameçon, un appât.

Un tel système de bas de ligne permet d'avoir un montage complet très simple d'utilisation et parfaitement sécurisé. A titre d'exemple un montage avec cinq positions, nous pouvons chercher à pêcher des poissons de fond, avec fil d'hameçon et un appât adapté à ce type de pêche. Mais nous pouvons aussi chercher des poissons de surface en adaptant un fil d'hameçon et un appât à ce type de pêche. Cette grande liberté de combinaison est accentuée par le remplacement rapide des lignes d'hameçon. L'adaptabilité est ainsi accrue.

L'invention permet aussi de renforcer les lignes d'hameçons. Comme nous l'avons vu précédemment les noeuds fragilisent la ligne. Particulièrement lorsque l'on utilise du fluorocarbone. Ce matériau est très efficace dans la pêche (indice de réfraction proche de 1 comme l'eau, grande résistance à l'abrasion et aux coupures dues aux dents des poissons), mais il a pour grand défaut, à diamètre égal, d'être moins résistant que le nylon. Cela minimise un peu ses principales qualités. Nous disposons de plusieurs solutions pour remédier à ceci : soit augmenter les diamètres ; ce qui va à l'encontre de la discrétion, soit coller, soit éviter au possible les noeuds ; ce que l'invention permet. Avec l'invention cette limitation est supprimée et l'on peut profiter de tous les avantages de ce matériau.

La présente divulgation porte également sur un dispositif d'écartement et d'attache d'un fil ou d'une corde comprenant :
∘ Une portion proximale configurée pour être montée sur un élément de fixation tel qu'un fil de fixation ou un mât, de manière à permettre une rotation libre du dispositif autour de l'élément de fixation;
∘ Une portion distale conformée pour être liée à la ligne d'hameçon et maintenue à distance dudit fil ou de ladite corde;
∘ Une portion d'écartement, s'étendant entre les portions proximale et distale et conformée pour maintenir la portion distale à distance de la portion proximale;

- La portion d'écartement comprenant :
   ∘ Une butée, comprenant et formée par, au moins un pli de la portion d'écartement;
   ∘ Une portion d'enroulement s'étendant depuis la butée jusqu'à la portion distale et s'étendant selon une direction principale ;
La butée est configurée de manière à ce qu'en passant le fil ou la corde dans la butée, la butée retiennent le fil ou la corde lorsqu'une tension est appliquée sur les deux brins du fil ou de la corde s'étendant depuis la butée et dans ladite direction principale selon laquelle la portion d'enroulement s'étend.

Ce dispositif d'écartement et d'attache peut aussi servir à la fixation d'autres éléments que les fils de pêche. Ainsi, la présente divulgation peut s'appliquer à la fixation d'une corde ou d'un fil quelconque par exemple au moyen de ce dispositif. Dans ce cas la portion proximale se fixerait sur à l'élément de fixation (un mât ou une première corde), et la fixation de la corde ou du fil quelconque, par exemple supportant un drapeau se ferait à l'aide de la butée.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :

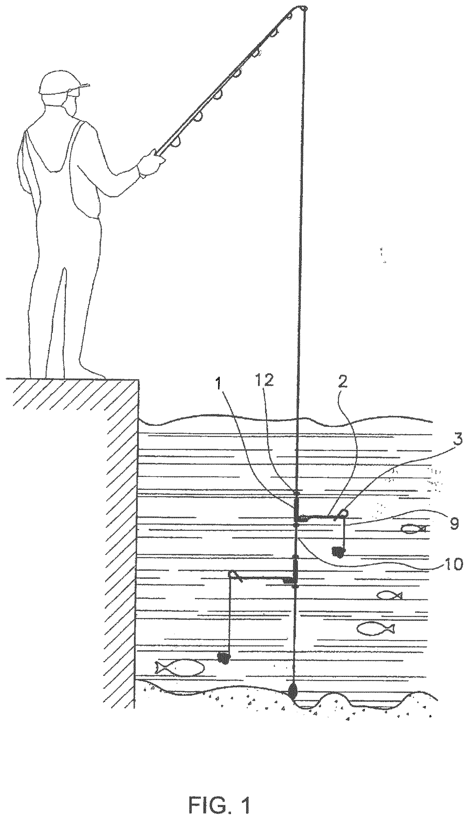

- la figure 1 montre le dispositif en utilisation ;
- la figure 2 montre le dispositif dans son ensemble ;
- la figure 3 montre la réalisation préférée de la portion d'écartement ;
- la figure 4 montre une autre réalisation de la portion d'écartement :
- la figure 5 montre le dispositif avec une ligne d'hameçon et rattaché à la ligne principale du bas de ligne ;
- la figure 6 montre le dispositif, configuré dans sa réalisation avec des spires écartée, rattaché au fil du bas de ligne et sur lequel est monté une ligne d'hameçon ;
- la figure 7 montre comment fixer la portion proximale à la ligne de bas de ligne dans la réalisation avec les spires écartées.

### DESCRIPTION DETAILLEE

Avant d'entrer dans le détail de formes préférées de réalisation de l'invention en référence aux dessins notamment, d'autres caractéristiques optionnelles de l'invention, qui peuvent être mises en oeuvre de façon combinée selon toutes combinaisons ou de manière alternative, sont indiquées ci-après :
- la portion d'enroulement est conformée de manière sensiblement rectiligne.
- les deux coudes du double coude sont compris dans le même plan.
- les deux coudes du double coude sont chacun compris dans un plan différent l'un de l'autre.
- au moins un desdits plans d'alignements est identique ou parallèle à un plan défini par la portion d'enroulement et un tube formé par la portion proximale.
- ledit le plan d'alignement est différent ou non parallèle de préférence perpendiculaire à un plan défini par la portion d'enroulement et un tube formé par la portion proximale.
- la butée et la portion d'enroulement forment une pièce monolithique.
- la portion d'écartement et au moins l'une des portions distales et proximales forment une pièce monolithique.
- le dispositif est formé par un fil métallique plié, le premier et le deuxième coudes étant formés par des plis dudit fil métallique plié.
- la portion proximale, la portion d'écartement et la portion distale forment une pièce monolithique. De préférence, la pièce monolithique est constituée par un fil métallique plié.
- la portion proximale comprend un tube configuré pour recevoir axialement le bas de ligne de manière à tourner librement autour dudit bas de ligne.
- la portion proximale comprend au moins un fil métallique enroulé pour former un tube.
- la portion proximale comprend, et de préférence est formée de spires, disposées de façon coaxiales.
- les spires sont configurées pour être jointes deux à deux de manière à ce que les spires adjacentes soient en contact sur tout leur pourtour.
- toutes les spires sont séparées d'une distance d'écartement.
- ladite distance d'écartement est comprise entre 0,08 millimètre et 3,3 millimètres.
- à l'issue de la formation avec la ligne d'hameçon d'une boucle et de deux brins s'étendant depuis la boucle, l'utilisateur tient d'une seule main les deux brins sans les lâcher et dans lequel l'utilisateur continue de tenir de ladite seule main les deux brins sans les lâcher jusqu'à et lors de ladite étape de passage dans la portion distale des deux brins de la boucle.
- la fixation sur le fil de bas de ligne de deux butées axiales, de part et d'autre de la portion proximale de manière à empêcher ou à limiter le coulissement du dispositif le long du bas de ligne.
- Les étapes précédentes sont effectuées sans effectuer de noeud.
- Système de bas de ligne comprenant une ligne d'hameçon qui comprend au moins les éléments suivants: un fil de pêche, un hameçon, un appât.

Pour la compréhension du dispositif on entendra par :
- bas de ligne : partie finale de la ligne de pêche comportant une ligne principale se terminant par exemple par un plomb, sur laquelle est attaché au moins un dispositif d'écartement et d'attache de ligne d'hameçon.
- fil de bas de ligne : fil principal du bas de ligne.
- appât : élément afin d'attirer le poisson, il peut être naturel ou non
- ligne d'hameçon : ensemble comprenant ligne d'hameçon auquel est rattaché au moins un hameçon et/ou un appât.
- noeud : enlacement serré de deux brins entre eux peu importe que les deux brins soit issus de fils différents ou non.

L'invention décrite ci-après concerne un dispositif d'écartement et d'attache de ligne d'hameçon 9 sur un bas de ligne.

Le dispositif que l'on peut notamment appeler « clipot » comprend une portion proximale 1, une portion d'écartement 2 et une portion distale 3.

### La portion proximale 1:

La portion proximale 1 permet la fixation du dispositif sur le fil du bas de ligne 10. Ladite portion proximale 1 comprend, et de préférence est formée, avantageusement de spires 11. Lesdites spires 11 forment un tube dans lequel le fil du bas de ligne peut facilement être inséré. Cette configuration préférée permet une rotation libre du dispositif autour du fil de bas de ligne 10 et de contribuer, de ce fait, à éviter un emmêlement des lignes d'hameçon. De plus cette facilité de montage et démontage du dispositif sur le fil de bas de ligne 10 permet une modularité du bas de ligne plus grande. L'ajout ou la suppression d'une ligne d'hameçon 9 se fait sans avoir à refaire tout le bas de ligne. Il suffit de positionner le dispositif dans les emplacements optionnels définis par des butées axiales 12 déjà positionnées sur le fil bas de ligne 10.

Les spires 11 décrites peuvent dans une réalisation de l'invention être collées bord à bord les unes aux autres. Dans ce cas la fixation du dispositif au fil de bas de ligne 10 se fait par l'enfilement dudit fil de bas de ligne 10 dans le tube de spires 11 depuis une extrémité axiale du tube jusqu'à l'autre extrémité axiale du tube.

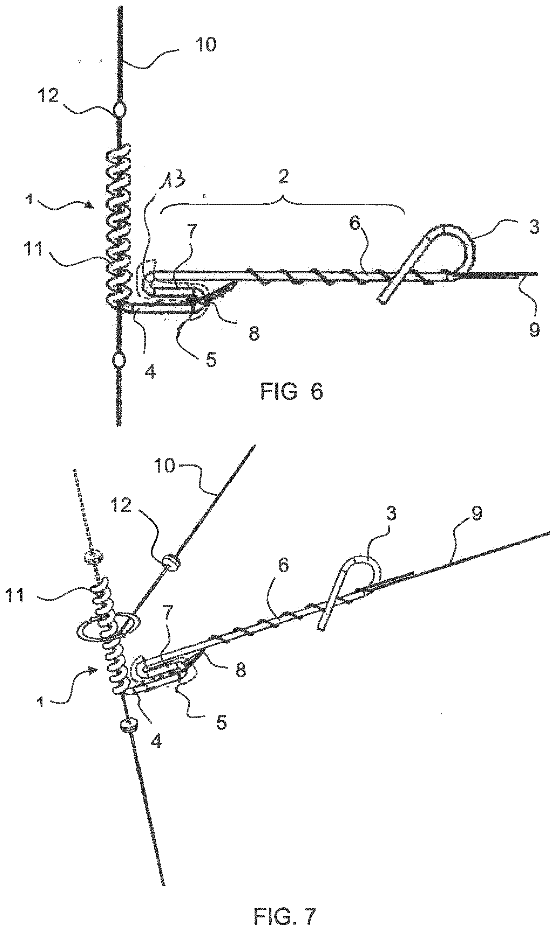

Dans une autre réalisation de l'invention les spires 11 peuvent avantageusement avoir une distance d'écartement entre elles. Cette distance d'écartement peut notamment être en fonction du diamètre du fil du bas de ligne. Ainsi l'écartement des spires 11 peut avantageusement varier de 0,08 millimètre pour un dispositif adapté aux fils de diamètres les plus fins à 3,3 millimètre pour un dispositif adapté aux fils de diamètres les plus gros comme illustrée figure 6. Cela permet de faire passer les fils entre les spires 11 afin de fixer le dispositif sans défaire les éléments déjà placés sur le fil de bas de ligne 10, ce qui permet de préparer des bas de lignes « nus » mais avec déjà plusieurs emplacements prévus pour recevoir les dispositifs. Les bas de lignes ainsi construits peuvent être avantageusement munis de boucles (collées) à leurs extrémités de manière à pouvoir être rapidement connectés à l'émerillon relié d'un coté au fil du moulinet et au plomb (pourvu d'un émerillon et d'un crochet) de l'autre coté. Lesdits bas de ligne peuvent notamment être emmagasinés sur des rouleaux de mousse.

La portion proximale 1 est avantageusement comprise entre deux butées axiales 12. Ces deux butées axiales 12 se fixent sur le fil de bas de ligne 10 afin d'encadrer la portion proximale 1 et de limiter le déplacement de ladite portion proximale 1 le long de la ligne du fil de bas de ligne 10. Lesdites butées axiales 12 peuvent être des perles à sertir ou à coller le long du fil du bas de ligne 10. La taille desdites butées axiales 12 est avantageusement définie pour bloquer le mouvement axial de la partie proximale 1. Le diamètre externe desdites butées 12 est donc supérieur au diamètre interne de la partie proximale 1.

### La portion d'écartement 2 :

Le dispositif comprend une portion d'écartement 2. Ladite portion d'écartement comprend une portion de liaison 4, une butée 5 et une portion d'enroulement 6.

### La portion de liaison 4 :

La portion de liaison 4 permet de joindre la butée 5 au tube de spires 11. La taille de cette portion de liaison 4 peut notamment varier afin de d'écarter la butée 5 de la portion proximale 1. Dans une réalisation de l'invention cette portion de liaison 4 peut par exemple atteindre plus de huit centimètres. Dans une autre réalisation de l'invention cette portion de liaison 4 peut être par exemple réduite à moins d'un millimètre. Ladite portion d'écartement 2 est avantageusement de forme rectiligne. Mais dans d'autres réalisations possibles elle peut avoir des formes variées.

### La butée 5 :

La butée 5 est l'élément qui va permettre de retenir en partie la boucle de la ligne d'hameçon 9. Ladite butée 5 comprend une portion de retenue 7, un premier coude 8 et un deuxième coude 13. Lesdits premier et deuxième coude 8 et 13 comprennent chacun une première extrémité et une deuxième extrémité. Ainsi, la portion de liaison 4 permet un lien entre la portion proximale 1 et la première extrémité du premier coude. La portion de liaison 4 s'étend entre les premier 8 et deuxième 13 coudes. Plus précisément, la portion de liaison 4 s'étend entre la deuxième extrémité du premier coude 8 et la première extrémité du deuxième coude 13. Enfin, la portion d'enroulement 6 permet le lien entre la deuxième extrémité du deuxième coude 13 et la portion distale 3. L'angle α (alpha), formé entre la portion de liaison 4 et la portion de retenue 7 et définissant l'inclinaison du premier coude 8 est de 0°. Sur les exemples illustrés, α est nul. Ainsi les portions de liaison 4 et de retenue 7 sont parallèles, suivant l'invention. De plus, la portion de retenue 7 est parallèle à la portion de liaison 4 et à la portion d'enroulement 6. Le deuxième coude 13 forme un angle β (beta) entre la portion de retenue 7 et la portion d'enroulement 6. L'angle beta est de 0°. Dans cette configuration, la portion de liaison d'écartement 4 et la portion d'enroulement 6 sont parallèles entre elles et avec la portion de retenue 7. Grâce à cette configuration la butée 5 retient la boucle lorsqu'une force axiale s'exerce en direction de la portion distale 3 du dispositif. Dans un mode de réalisation non couvert par l'invention, l'angle α et/ou β ont une valeur comprise entre 0° et 90° inclus.

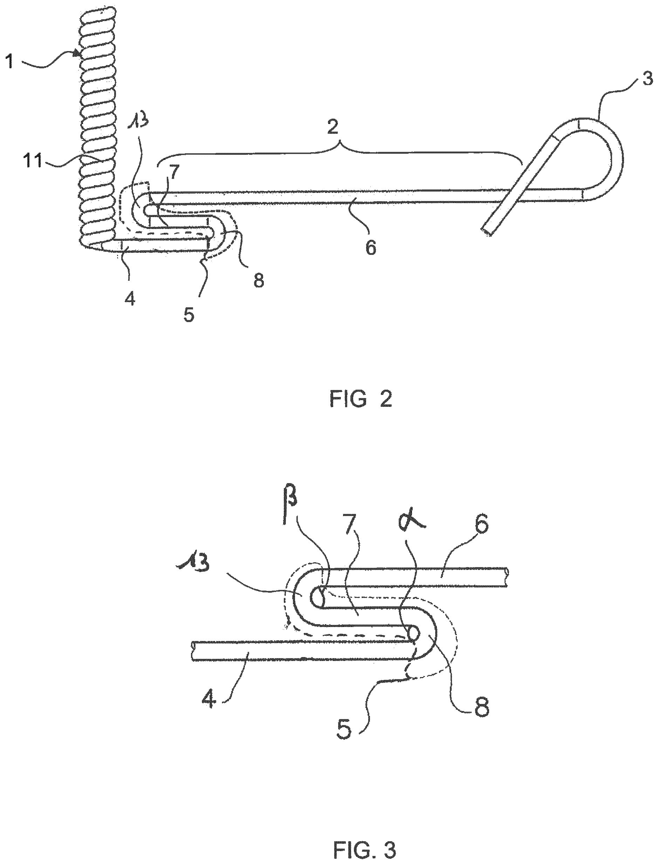

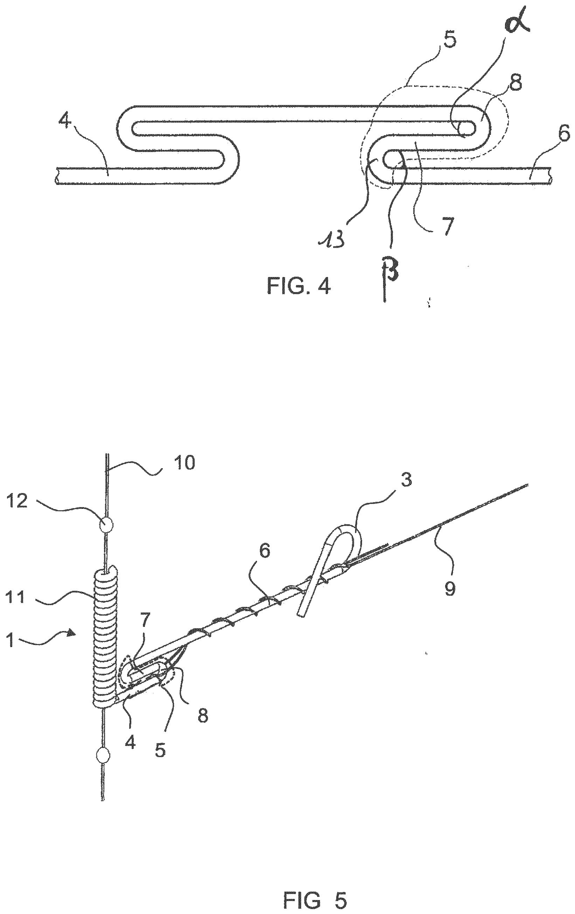

La forme de la butée 5 peut varier. Ainsi dans la réalisation préférée de l'invention la butée 5 comprend, et de préférence est formée, d'un double coude dans lequel les coudes selon le mode de réalisation illustré en figure 3, sont placés l'un au-dessus de l'autre, c'est-à-dire autour d'un axe perpendiculaire à la portion de liaison 4. De préférence le dispositif comprend uniquement deux coudes 8, 13 entre ses portions proximale 1 et distale 3.
Une autre réalisation de l'invention, illustrée en figure 4, peut comprend deux paires de double coude par exemple. Dans le cas d'un simple double coude, le premier coude 8 permet la retenue du fil.. La portion de « retour » entre le premier coude, et le deuxième coude, correspond à la portion de retenue 7 de la butée 5. De préférence dans ce mode de réalisation le dispositif comprend uniquement deux doubles coudes entre ses portions proximale 1 et distale 3.
La taille de la butée 5 peut avantageusement varier pour augmenter ou diminuer la souplesse du dispositif.
De même, la butée 5 peut se trouver dans des plans différents par rapport au plan formé par la portion proximale 1 et la portion de liaison 4, elle peut ainsi être parallèle, perpendiculaire ou simplement inclinée audit plan formé par la portion proximale 1 et la portion de liaison 4. Dans une réalisation préférée de l'invention les deux coudes formant le double coude sont dans un même plan et parallèle à la portion de liaison 4. Dans cette réalisation les deux coudes du double coude sont aussi dans le même plan. Dans une autre réalisation de l'invention les deux coudes sont chacun dans des plans différents.

### La portion d'enroulement 6 :

La portion d'enroulement 6 a pour objectif de permettre d'enrouler plusieurs fois les brins de la boucle. Comme dit précédemment, cette portion d'enroulement est reliée à une extrémité à la deuxième extrémité du second coude 13 et à son autre extrémité à la portion distale 3. C'est l'enroulement desdits deux brins de la boucle qui va créer une force de friction suffisante pour retenir, avec la butée 5, la ligne d'hameçon 9. De préférence, la portion d'enroulement 6 est configurée pour permettre d'enrouler au moins trois fois et de préférence six fois, comme illustré sur les figures, les brins de la boucle autour de la portion d'enroulement 6. Ladite portion d'enroulement 6 a aussi une taille qui peut varier afin d'une part d'augmenter le nombre de tours possible, et d'autre part de faciliter la réalisation desdits tours. Par exemple dans une réalisation du dispositif la portion d'enroulement 6 peut mesurer plus de trois centimètres et dans une autre réalisation la portion d'enroulement 6 peut mesurer moins de un centimètre. Enfin ladite portion d'enroulement 6 est avantageusement rectiligne, mais elle peut avoir des formes variées pour faciliter l'enroulage des brins de la ligne d'hameçon 9.

Enfin la portion d'écartement 2 a une taille globale pouvant varier de préférence entre deux centimètres et vingt centimètres.

### La portion distale 3 :

La portion distale 3 comprend, et de préférence est formée, avantageusement une boucle. De manière préférentielle cette boucle n'est pas fermée afin de pouvoir passer les deux brins de la ligne d'hameçon 9 dedans. Cette portion distale 3 permet d'empêcher le déroulement de la ligne d'hameçon 9 autour de la portion d'enroulement 6 et ainsi de garder une force de friction constante. De plus cette portion distale 3 permet de garder un alignement de la ligne d'hameçon 9 avec la portion d'enroulement 6. La taille de cette portion est avantageusement définit par la taille des brins qu'elle va recevoir. La portion distale 3 est, dans la réalisation préférée du dispositif, avantageusement dans le même plan qu'un plan formé par la portion d'enroulement 6 du dispositif et portion de liaison 4. Dans une autre réalisation cette portion distale 3 est dans un plan différent du plan défini précédemment.

L'attache de la ligne d'hameçon 9 sur le dispositif se fait notamment en formant une boucle avec l'extrémité de la ligne d'hameçon 9 qui est opposée à l'hameçon. On va ensuite enfiler cette boucle sur la butée 5 et plus précisément sur le premier coude 8. On va ensuite effectuer plusieurs tours avec les deux brins de la boucle autour de la portion d'enroulement 6. Puis l'on va passer les deux brins dans la portion distale 3.

Avec cette réalisation, il apparait clairement que les deux brins de la boucle sont enroulés uniquement autour de la portion d'enroulement. Ainsi, aucun contact n'est réalisé entre la ligne d'hameçon 9 et la portion de liaison 4. Le fil est enroulé selon une direction unique ce qui permet notamment de limiter les plis, et donc les zones de faiblesse sur le fil. De plus, en enroulant les deux brins uniquement autour de la porte d'enroulement 6, la retenue de la ligne d'hameçon se fait sans noeud. C'est-à-dire sans croisement des deux brins entre eux, ce qui permet une fixation beaucoup plus rapide de la ligne d'hameçon sur le dispositif.

Le dispositif ainsi décrit permet d'une part de répondre à la problématique de multiplication des lignes d'hameçon tout en évitant des emmêlements desdites lignes d'hameçon et d'autre part de répondre à la problématique de fiabilisation et de simplification de l'attache de la ligne d'hameçon 9. En effet l'attache de la ligne d'hameçon 9 se fait sans noeud ce qui permet d'accroitre la fiabilité de la ligne (pas de noeud pour fragiliser le fil, et pas de risque de mauvaise réalisation du noeud) mais aussi d'accroitre la simplicité d'utilisation du dispositif. N'importe quelle personne, dans toutes les situations peuvent aisément utiliser le dispositif. Le pêcheur en compétition peut ainsi adapter aisément, précisément et rapidement la longueur des lignes d'hameçon 9 en fonction du diamètre et de la nature du fil (nylon ou fluorocarbone) ainsi qu'en fonction du type d'hameçon (forme, taille etc.) utilisé.

Le dispositif est notamment formé d'un fil métallique que l'on va plier et/ou enrouler. Le but de cette fabrication est l'obtention d'une pièce monolithique. Le matériau utilisé est avantageusement inoxydable, tel de l'inox, ou tout le moins rendu inoxydable par un revêtement. De plus l'épaisseur du fil métallique, et donc l'épaisseur du dispositif peut varier. Cette variation permet notamment de définir un dispositif en fonction de la taille du poisson recherché. Ainsi le diamètre du fil métallique est compris, de préférence, entre 0.30 millimètre et 0.80 millimètre ou plus.

L'invention n'est pas limitée aux modes de réalisation précédemment décrits mais s'étend à tous modes de réalisation couverts par les revendications.

### REFERENCES

1. Portion proximale
2. Portion d'écartement
3. Portion distale
4. Portion de liaison
5. Butée
6. Portion d'enroulement
7. Portion de retenue
8. premier coude
9. Ligne d'hameçon
10. Fil de bas de ligne
11. Spires
12. Butées axiales
13. Deuxième coude

## Revendications

1. Dispositif d'écartement et d'attache de ligne d'hameçon (9) comprenant :
∘ Une portion proximale (1) configurée pour être montée sur un fil de bas de ligne (10) de manière à permettre une rotation libre du dispositif autour du fil de bas de ligne (10) ;
∘ Une portion distale (3) conformée pour être liée à la ligne d'hameçon (9) et maintenue à distance du fil de bas de ligne (10) ;
∘ Une portion d'écartement (2), s'étendant entre les portions proximale (1) et distale (3) et conformée pour maintenir la portion distale (3) à distance de la portion proximale (1) et comportant une butée (5) ;
**caractérisé en ce que** :
- la butée (5) comprend : un premier coude (8), un deuxième coude (13) et une portion de retenue (7) ; ladite portion de retenue (7) s'étendant entre le premier coude (8) et le deuxième coude (13) ;
**en ce que** le dispositif comprend :
- une portion de liaison (4) s'étendant entre la portion proximale (1) et ledit premier coude (8) ;
- une portion d'enroulement (6) de la ligne d'hameçon (9) s'étendant depuis le deuxième coude (13) jusqu'à la portion distale (3) et s'étendant dans une direction principale ;
**en ce que** la portion de liaison (4), la portion de retenue (7) et la portion d'enroulement (6) sont parallèles entre elles ;
et **en ce que** la butée (5) est configurée de manière à ce qu'en passant une ligne d'hameçon (9) dans la butée (5), la butée (5) retienne la ligne d'hameçon (9) lorsqu'une tension est appliquée sur les deux brins de la ligne d'hameçon (9) s'étendant depuis la butée (5) et dans ladite direction principale selon laquelle la portion d'enroulement (6) s'étend.

2. Dispositif selon l'une quelconque des revendications précédentes dans lequel la portion d'enroulement (6) est conformée de manière sensiblement rectiligne.

3. Dispositif selon l'une quelconque des revendications précédentes dans lequel les premier et deuxième coudes (8, 13) forment un double coude, les premier et deuxième coudes (8, 13) sont compris dans un même plan d'alignement.

4. Dispositif selon la revendication précédente dans lequel ledit plan d'alignement est identique ou parallèle à un plan défini par la portion d'enroulement (6) et un tube formé par la portion proximale (1).

5. Dispositif selon l'une quelconque des revendications précédentes dans lequel la butée (5), la portion d'enroulement (6) forment une pièce monolithique, la portion proximale (1), la portion d'écartement (2) et la portion distale forment une pièce monolithique, et dans lequel la pièce monolithique est constituée par un fil métallique plié, le premier et le deuxième coudes (8, 13) étant formés par des plis dudit fil métallique plié.

6. Dispositif selon l'une quelconque des revendications précédentes dans lequel la portion proximale (1) comprend un tube configuré pour recevoir axialement le fil de bas de ligne (10) de manière à tourner librement autour dudit fil de bas de ligne (10).

7. Dispositif selon la revendication précédente dans lequel ledit tube comprend des spires (11) métalliques disposées de façon coaxiales.

8. Dispositif selon la revendication précédente dans lequel les spires (11) sont :
- configurées pour être jointes deux à deux de manière à ce que les spires (11) adjacentes soient en contact sur tout leur pourtour ; ou
- séparées d'une distance d'écartement comprise entre 0,08 millimètre et 3,3 millimètres.

9. Procédé d'attache d'une ligne d'hameçon (9) au dispositif selon l'une quelconque des revendications précédentes comprenant :
∘ La liaison d'un fil de bas de ligne (10) à la portion proximale (1) de manière à ce que ladite portion proximale (1) puisse effectuer une rotation libre autour dudit fil de bas de ligne (10).
∘ la liaison d'une ligne d'hameçon (9) avec la portion distale (3) maintenue à distance du fil du bas de ligne (10) par la portion d'écartement (2) ;
∘ la formation avec la ligne d'hameçon (9) d'une boucle et de deux brins s'étendant depuis la boucle ;
∘ l'enfilement de ladite boucle dans le premier coude (8) de ladite butée (5) ;
∘ l'enroulement des deux brins de la boucle uniquement autour de la portion d'enroulement (6) de manière à effectuer une pluralité de tours ;
∘ le passage dans la portion distale (3) des deux brins de la boucle.

10. Procédé selon la revendication précédente dans lequel à l'issue de la formation avec la ligne d'hameçon (9) d'une boucle et de deux brins s'étendant depuis la boucle, l'utilisateur tient d'une seule main les deux brins sans les lâcher et dans lequel l'utilisateur continue de tenir de ladite seule main les deux brins sans les lâcher jusqu'à et lors de ladite étape de passage dans la portion distale (3) des deux brins de la boucle.

11. Procédé selon l'une quelconque des deux revendications précédentes comprenant avant ou après l'étape de liaison du fil de bas de ligne (10) à la portion proximale (1), la fixation sur le fil de bas de ligne (10) de deux butées axiales (12), de part et d'autre de la portion proximale (1) de manière à empêcher ou à limiter le coulissement du dispositif le long du fil de bas de ligne (10).

12. Procédé selon l'une quelconque des trois revendications précédentes dans lequel les étapes précédentes de formation, d'enfilement, d'enroulement et de passage sont effectuées sans effectuer de noeud sur la ligne d'hameçon (9).

13. Système de bas de ligne comprenant :
∘ Au moins un dispositif pour ligne d'hameçon selon l'une quelconque des revendications 1 à 8 ;
∘ Une ligne d'hameçon passée dans ladite butée et enroulée autour de ladite portion d'enroulement.

14. Système de bas de ligne selon la revendication précédente dans lequel ligne d'hameçon comprend au moins les éléments suivants : un fil de pêche, un hameçon, un appât.

## Patentansprüche

1. Vorrichtung zur Trennung und Befestigung einer Köderleine (9), welche Folgendes umfasst:
- einen proximalen Abschnitt (1), der so gestaltet ist, dass er auf einem Vorfach (10) so montiert werden kann, dass die freie Drehung der Vorrichtung um den Vorfach (10) möglich ist;
- einen distalen Abschnitt (3), der so ausgebildet ist, dass er mit der Köderleine (9) verbunden und in Entfernung des Vorfachs (10) gehalten werden kann;
- einen Trennabschnitt (2), der sich zwischen dem proximalen Abschnitt (1) und dem distalen Abschnitt (3) erstreckt und so ausgebildet ist, dass er den distalen Abschnitt (3) vom proximalen Abschnitt (1) entfernt halten kann und einen Anschlag (5) umfasst;
**dadurch gekennzeichnet, dass**:
- der Anschlag (5) folgendes umfasst: ein erstes Winkelstück (8), ein zweites Winkelstück (13) und einen Rückhalteabschnitt (7), wobei sich besagter Rückhalteabschnitt (7) zwischen dem ersten Winkelstück (8) und dem zweiten Winkelstück (13) erstreckt;
- und dadurch, dass die Vorrichtung folgendes umfasst:
- einen Verbindungsabschnitt (4), der sich zwischen dem proximalen Abschnitt (1) und besagtem ersten Winkelstück (8) erstreckt;
- einen Wickelabschnitt (6) der Köderleine (9), der sich vom zweiten Winkelstück (13) bis zum distalen Abschnitt (3) in einer Hauptrichtung erstreckt,
und dadurch, dass der Verbindungsabschnitt (4), der Rückhalteabschnitt (7) und der Wickelabschnitt (6) parallel zueinander sind;
- und dadurch, dass der Anschlag (5) so gestaltet ist, dass der Anschlag (5) beim Durchlaufen einer Köderleine (9) durch den Anschlag (5) die Köderleine (9) zurückhält, wenn eine Spannung auf die beiden Stränge der Köderleine (9) angewendet wird, welche sich vom Anschlag (5) in besagte Hauptrichtung erstrecken, in welcher sich der Wickelabschnitt (6) erstreckt.

2. Vorrichtung nach einem der vorhergehenden Ansprüche, in welcher der Wickelabschnitt (6) im Wesentlichen geradlinig ausgebildet ist.

3. Vorrichtung nach einem der vorhergehenden Ansprüche, in welcher das erste und das zweite Winkelstück (8, 13) ein doppeltes Winkelstück bilden, wobei sich das erste und das zweite Winkelstück (8, 13) auf ein und derselben Ausrichtungsebene befinden.

4. Vorrichtung nach dem vorhergehenden Anspruch, in welcher besagte Ausrichtungsebene identisch ist mit einer Ebene, die vom Wickelabschnitt (6) und einem durch den proximalen Abschnitt (1) gebildeten Rohr abgegrenzt wird und parallel dazu verläuft.

5. Vorrichtung nach einem der vorhergehenden Ansprüche, in welcher der Anschlag (5) und der Wickelabschnitt (6) ein monolithisches Teil bilden, wobei der proximale Abschnitt (1), der Trennabschnitt (2) und der distale Abschnitt ein monolithisches Teil bilden, und in dem das monolithische Teil aus einem geknickten Metalldraht besteht, wobei das erste und das zweite Winkelstück (8, 13) durch die Knicke des geknickten Metalldrahts gebildet werden.

6. Vorrichtung nach einem der vorhergehenden Ansprüche, in welcher der proximale Abschnitt (1) ein Rohr umfasst, das so gestaltet ist, dass es den Vorfach (10) axial aufnimmt, sodass es sich frei um besagten Vorfach (10) drehen kann.

7. Vorrichtung nach dem vorhergehenden Anspruch, in welcher besagtes Rohr metallische Windungen (11) umfasst, die koaxial angeordnet sind.

8. Vorrichtung nach dem vorhergehenden Anspruch, in welcher die Windungen (11):
- so gestaltet sind, dass sie jeweils paarweise so aneinandergefügt werden können, dass die aneinandergrenzenden Windungen (11) an ihrem gesamten Umfang miteinander in Berührung sind,
oder
- in einem Abstand zwischen 0,08 mm und 3,3 mm voneinander getrennt sind.

9. Verfahren zum Befestigen einer Köderleine (9) an der Vorrichtung nach einem der vorhergehenden Ansprüche, welches folgende Schritte umfasst:
- die Verbindung eines Vorfachs (10) mit dem proximalen Abschnitt (1), sodass besagter proximaler Abschnitt (1) eine freie Drehung um besagten Vorfach (10) machen kann.
- die Verbindung einer Köderleine (9) mit dem distalen Abschnitt (3), der durch den Trennabschnitt (2) im Abstand zum Vorfach (10) gehalten wird.
- mithilfe der Köderleine (9) die Bildung einer Schlaufe und zweier Schlaufenteile;
- das Überstreifen der Schlaufe über das erste Winkelstück (8) des besagten Anschlags (5);
- das Aufwickeln der beiden Schlaufenteile der Schlaufe nur um den Wickelabschnitt (6), so dass eine Vielzahl von Umdrehungen durchgeführt werden;
- das Durchziehen der beiden Schlaufenteile der Schlaufe durch den distalen Abschnitt (3).

10. Verfahren nach dem vorhergehenden Anspruch, in dem der Benutzer nach der Bildung einer Schlaufe und zweier, sich von der Schlaufe aus erstreckender Schlaufenteile mithilfe der Köderleine (9) die beiden Schlaufenteile in einer Hand hält, ohne sie loszulassen, und in dem der Benutzer die beiden Schlaufenteile mit einer einzigen Hand so lange hält, ohne sie loszulassen, bis der besagte Schritt des Durchziehens der beiden Schlaufenteile der Schlaufe durch den distalen Abschnitt (3) folgt und solange der Schritt andauert.

11. Verfahren nach einem der beiden vorhergehenden Ansprüche, in welchem vor oder nach dem Schritt der Verbindung des Vorfachs (10) mit dem proximalen Abschnitt (1) die Befestigung der beiden axialen Anschläge (12) zu beiden Seiten des proximalen Abschnitts (1) am Vorfach (10) erfolgt, so dass das Gleiten der Vorrichtung entlang des Vorfachs (10) vermieden oder begrenzt wird.

12. Verfahren nach einem der drei vorhergehenden Ansprüche, in welchem die vorhergehenden Schritte der Bildung, des Überstreifens, des Aufwickelns und des Durchziehens durchgeführt werden, ohne einen Knoten in die Köderleine (9) zu machen.

13. Vorfachsystem, das Folgendes umfasst:
- zumindest eine Vorrichtung für eine Köderleine nach einem der Ansprüche 1 bis 8;
- eine Köderleine, die durch besagten Anschlag gezogen und um besagten Wickelabschnitt gewickelt wird.

14. Vorfachsystem nach dem vorhergehenden Anspruch, in dem die Köderleine zumindest die folgenden Elemente umfasst: eine Angelschnur, einen Angelhaken, einen Köder.

## Claims

1. A device for spacing and fastening a hook line (9) comprising:
• a proximal portion (1) so configured as to be mounted onto a leader line (10) so as to enable the free rotation of the device around the leader line (10) ;
• a distal portion (3) so configured as to be connected to the hook line (9) and kept at a distance from the leader line (10);
• a spacing portion (2), which extends between the proximal (1) and distal (3) portions and so configured as to keep the distal portion (3) at a distance from the proximal portion (1) and comprising a stop (5);
**characterized in that**:
• the stop (5) comprises: a first elbow (8), a second elbow (13) and a retaining portion (7), with said retaining portion (7) extending between the first elbow (8) and the second elbow (13);
**in that** the device comprises:
- a connecting portion (4) which extends between the proximal portion (1) and said first elbow (8);
- winding portion (6) of the hook line (9) which extends from the second elbow (13) up to the distal portion (3) and which extends in a main direction;
**in that** the connecting portion (4), the retaining portion (7) and the winding portion (6) are parallel to one another;
and **in that** the stop (5) is so configured that, when a hook line (9) is passed into the stop (5), said stop (5) retains the hook line (9) when a tension is applied onto the two strands of the hook line (9) which extend from the stop (5) and in said main direction along which the winding portion (6) extends.

2. A device according to any one of the preceding claim, wherein the winding portion (6) has a substantially straight shape.

3. A device according to any one of the preceding claims, wherein the first and second elbows (8, 13) form a double elbow, with the first and second elbows (8, 13) being included in the same alignment plan.

4. A device according to the preceding claim, wherein said alignment plan is identical with or parallel to a plan defined by the winding portion (6) and a tube formed by the proximal portion (1).

5. A device according to any one of the preceding claims, wherein the stop (5) and the winding portion (6) form a one-piece part, the proximal portion (1), the spacing portion (2) and the distal portion form a one-piece part, and wherein the one-piece part consists of a folded metallic wire, with the first and the second elbows (8, 13) being formed by folds of said folded metallic wire.

6. A device according to any one of the preceding claims, wherein the proximal portion (1) comprises a tube so configured as to axially receive the leader line (10) so that it can freely rotate around said leader line (10).

7. A device according to the preceding claim, wherein said tube comprises coaxially positioned metallic turns (11).

8. A device according to the preceding claim, wherein the turns (11) are:
• so configured as to be paired so that the adjacent turns can be in mutual contact on their whole periphery;
or
• separated by a spacing distance ranging from 0.08mm to 3.3mm.

9. A method for fastening a hook line (9) to the device according to any one of the preceding claims, comprising:
• the connection of a leader line (10) with the proximal portion (1), so that said proximal portion (1) can make a free rotation around said leader line (10) ;
• the connection of a hook line (9) with the distal portion, kept at a distance from the leader line (10) by the spacing portion (2);
• the forming of a loop and two strands which extend from the loop with the hook line (9);
• the stringing of said loop into the first elbow (8) of said stop (5);
• the winding of the two strands of the loop around the winding portion (6) only, so as to make a plurality of turns;
• the passing of the two strands of the loop into the distal portion (3).

10. A method according to the preceding claim, wherein, upon completion of the forming of a loop and of two strands which extend from the loop with the hook line (9), the user holds, in one hand, the two strands without letting same go, and wherein the user goes on holding the two strands in said one hand without letting same go, up to and during said step of passing the two stands of the loop into the distal portion (3).

11. A method according to any one of the two preceding claims, comprising, prior to or after the step of connecting the leader line (10) to the proximal portion (1), the fastening to the leader line (10) of two axial stops (12), on either side of the proximal portion (1) so as to prevent, or limit the sliding of the device along the leader line (10).

12. A method according to any one of the preceding three claims, wherein the preceding steps of forming, stringing, winding and passing are completed without making knots on the hook line (9).

13. A leader system comprising:
• at least one device for a hook line according to any one of claims 1 to 8;
• a hook line going through said stop and wound around said winding portion.

14. A leader system according to the preceding claim, wherein the hook line comprises at least the following elements: a fishing line, a hook, bait.
